# EUROPEAN PATENT SPECIFICATION

(11) **EP 4 388 156 B1**
(45) Date of publication and mention of the grant of the patent: **20.08.2025**
(21) Application number: 22702704.2
(22) Date of filing: 28.01.2022
(51) Int. Cl.: E01C 19/05, E01C 19/10

(54) **CONTROL OF AN ASPHALT MIXING PLANT**
STEUERUNG EINER ASPHALTMISCHANLAGE
COMMANDE D'UNE INSTALLATION DE MÉLANGE D'ASPHALTE

(43) Date of publication of application: 26.06.2024
(73) Proprietor: Ammann Schweiz AG, 4900 Langenthal (CH)
(72) Inventor: KLARER, Michael, 5063 Wölflinswil (CH); BOESIGER, Lukas, 5614 Sarmenstorf (CH)
(74) Representative: E. Blum & Co. AG
(86) International application number: PCT/EP2022/052059
(87) International publication number: WO 2023/143733

(56) References cited:
- JP-A- H10 140 516
- US-A- 3 336 019
- US-A1- 2014 373 385
- TORE HAGGLUND: "A predictive PI controller for processes with long dead times", IEEE CONTROL SYSTEMS MAGAZINE, vol. 12, no. 1, February 1992 (1992-02-01), pages 57 - 60, XP002807298

## Description

### Technical Field

The present invention pertains in general to an asphalt mixing plant which includes a control unit. Further aspects relate to a method for operating an asphalt mixing plant and a computer program product for operating a control unit of an asphalt mixing plant.

### Background Art

In an asphalt mixing plant an asphalt mixture is produced by a thermal mixing process of mineral rocks, fillers, bitumen and possibly additives. The production of an asphalt mixture is a complex procedure which is usually controlled by a central control unit.

There are generally two main production methods.

According to a continuous production method, the mixing process takes place in a continuous manner. More particularly, the individual components of the asphalt mixture are added continuously to the mixing process. This method is particularly suitable for large volumes with the same asphalt mixing recipe.

According to a discontinuous production method, pre-weighed components of the bituminous mixture are batch mixed in an asphalt mixer. This method is more flexible as it allows batch-by-batch changes of the asphalt mixing recipe. In addition, a higher mixing quality and subsequently a higher quality of the asphalt mixture is achieved.

Asphalt mixing plants comprise one or more drying drums for drying and heating process materials. This usually includes a first drying drum for drying and heating virgin aggregate, i.e. the new mineral, as well as a second drying drum for drying and heating reclaimed asphalt.

In order to achieve a high quality of the asphalt mixture, it is important to perform the drying and heating of the materials in the drying drum(s) at predefined as constant as possible material temperatures. However, the predefined as constant as possible material temperatures depend on the respective mixing recipe of the respective asphalt. Due to the large number and bandwidth of process parameters, the control of the desired material temperature is a challenge. Such process parameters include e.g. the composition of the material, fluctuating humidity as well as variable dosages and others.

In addition to the control of the material temperatures, it is desirable to keep the raw gas temperature leaving (or exiting) the dryer at predefined levels, in particular in view of the filter performance of a subsequent downstream filter. For this purpose, it is known to equip the drying drums with frequency converters which allow an operator of the asphalt mixing plant to manually adapt the raw gas temperature by changing the rotational frequency of the drying drum.

US 8 863 404 B1 and US 2014/373385 A1 disclose a dryer performance optimization system comprising a dryer being adapted to rotate at variable speeds and a variable frequency drive being adapted to vary the rotational speed of the dryer. The disclosed system also comprises a baghouse being adapted to receive exhaust gas from the dryer and a controller being adapted to control the temperature of the exhaust gas from the dryer by varying the rotational speed of the dryer. However, the system of US 8 863 404 B1 and US 2014/373385 does not disclose a control of the material temperature.

US 3 336 019 A discloses a process and apparatus for heating particulate solids in a rotary kiln. The rotary kiln is provided with an axial burner comprising a burner body having an axial nozzle supplied form a first fuel line and a ring of surrounding nozzles supplied from a second fuel line. Separate flow control means are provided in the first and second fuel lines. The flow rate of fuel to the axial nozzle is regulated to control stack gas temperature and the flow rate of fuel to the ring nozzles is regulated to control the temperature of heated solids egressing from the kiln.

The document by Tore Hagglund "A predictive PI controller for processes with long deadtimes", IEEE Control Systems Magazine, vol. 12, no. 1, pp. 57-60, Feb. 1992, doi: 10.1109/37.120455., discloses a predictive PI controller with dead-time compensation. The advantage of the described controller compared with the other dead time compensating controllers is that although it contains five parameters, only three are adjusted by the operator, namely, the gain, the integral time and the dead time.

JP H10 140516 A discloses a burner combustion controlling method of an asphalt plant. A necessary amount of combustion is calculated from the detected aggregate supply amount and aggregate temperature set point on the basis of theoretical combustion. The temperature variation is calculated from an aggregate temperature successively detected at an outlet of the dryer, a trend of the aggregate temperature is forecasted from the temperature variation, and a tolerance between the forecasting value and aggregate temperature set point is obtained. A correction amount of combustion for correcting the current amount of combustion is calculated on the basis of the tolerance amount and necessary amount of combustion, and an amount of combustion of a burner is corrected by the correction amount of combustion.

### Disclosure of the Invention

One problem of an aspect of the invention is to provide an asphalt mixing plant that allows to control the drying and heating of materials in a drying drum of the asphalt mixing plant in an advantageous manner, in particular in view of ecological worthwhile aspects.

According to an embodiment of a first aspect of the invention, there is provided an asphalt mixing plant according to claim 1, comprising a first drying drum for drying and heating a first aggregate to a first aggregate temperature. The first drying drum comprises a first burner. The asphalt mixing plant further comprises a first controller comprising a first control loop configured to control the first aggregate temperature of the first aggregate and a second controller comprising a second control loop configured to control a first raw gas temperature of a first raw gas of the first drying drum. The first controller and the second controller are configured to operate independently from each other. The first controller is configured to control the first aggregate temperature by controlling or in other words adapting the burner load or in other words the thermal output power of the first burner. The first drying drum is configured to rotate at a first rotational speed. The second controller is configured to control the first raw gas temperature of the first raw gas exiting the first drying drum by controlling or in other words adapting the first rotational speed of the first drying drum.

Such an embodied asphalt mixing plant allows to operate the asphalt mixing plant in such a way that both the temperature of the first aggregate as well as the first raw gas temperature of the first raw gas is automatically controlled. This allows to keep both the first aggregate temperature as well as the first raw gas temperature at desired levels or within desired ranges without a manual control of an operator of the asphalt mixing plant.

Investigations of the applicant have shown that such a separate control of the first aggregate temperature and the first raw gas temperature by means of separate and independent controllers provide advantageous results. Furthermore, such a solution with separate controllers may be implemented with reduced complexity compared with a single multi-value controller.

Embodiments of the invention are based on a unexpected discovery of the inventors that despite the fact that there are interdependencies between control parameters of the first controller and its corresponding first control loop and the second controller and its corresponding second control loop, these interdependencies may be purposely ignored by providing two separate controllers and by operating these controllers independently.

The mentioned interdependencies between parameters of the first controller and its first control loop and parameters of the second controller and its second control loop are as follows: An increase of the burner load of the first burner results in an increase of the first aggregate temperature as well as in an increase of the first raw gas temperature. Accordingly, the burner load of the first burner is positively correlated with both the first aggregate temperature as well as the first raw gas temperature.

However, an increase of the first rotational speed of the first drying drum results on the one hand in an increase of the first aggregate temperature, but on the other hand in a decrease of the first raw gas temperature. Accordingly, the first rotational speed of the first drying drum is positively correlated with the first aggregate temperature, but negatively correlated with the first raw gas temperature.

These complex interdependencies make a control of both the first aggregate temperature and the first raw gas temperature very challenging and would usually indicate the use of a complex multi-value controller.

The unexpected discovery by the investigations of the applicant have resulted in a solution that according to embodiments purposely ignores these complex interdependencies and uses two independent controllers that operate independently from each other, but nevertheless provide an advantageous and efficient control solution with low complexity.

According to an embodiment, the asphalt mixing plant comprises a second drying drum for drying and heating a second aggregate to a second aggregate temperature and the second drying drum comprises a second burner. Furthermore, the asphalt mixing plant comprises a third controller comprising a third control loop configured to control the second aggregate temperature of the second aggregate and a fourth controller comprising a fourth control loop configured to control a second raw gas temperature of a second raw gas of the second drying drum. The third controller and the fourth controller are configured to operate independently from each other.

Such an embodied method comprises four independent controllers and four independent control loops that control the first and the second aggregate temperature and the first and the second raw gas temperature independently from each other.

The third controller may be in particular configured to control the second aggregate temperature of the second drying drum by controlling the burner load of the second burner. The second drying drum may be in particular configured to rotate at a second rotational speed and the fourth controller may be configured to control the second raw gas temperature of the second drying drum by controlling the second rotational speed of the second drying drum.

According to embodiments having only one drying drum, the first aggregate may be a virgin aggregate, i.e. new mineral, or reclaimed asphalt.

According to embodiments having two drying drums, the first aggregate may be in particular a virgin aggregate and the second aggregate may be reclaimed asphalt or vice versa.

According to an embodiment, the first controller may be configured to compensate a deadtime of the first control loop and/or the third controller may be configured to compensate a deadtime of the third control loop. The deadtime may also be denoted as process deadtime.

Such controllers with deadtime compensation show advantageous control results for the first and the third control loop. This is based on the finding that there is some deadtime between a change in the burner load and a corresponding change of the first or the second aggregate temperature.

According to an embodiment, the first controller is a predictive Proportional-Integral controller. According to an embodiment, the third controller is a predictive Proportional-Integral controller
Investigations of the applicant have discovered that such predictive PI-controllers show particularly advantageous control results for the first and the third control loop.

According to embodiments, the second controller may be a Proportional-Integral controller. According to embodiments, the fourth controller may be a Proportional-Integral controller.

Investigations of the applicant have discovered that such pure PI-controllers show particularly advantageous control results for the second and the fourth control loop.

Furthermore, investigations of the applicant have discovered that in particular the combination of using predictive PI-controllers for the first and the third control loop and using pure PI-controllers for the second and the fourth control loop show particularly advantageous overall control results.

According to embodiments the first drying drum and/or the second drying drum may be direct flow drums.

According to embodiments, the first drying drum and/or the second drying drum may be counter flow drums.

According to embodiments, such an asphalt mixing plant comprises a first temperature sensor for sensing the first raw gas temperature of the first drying drum. The first temperature sensor may be arranged in a duct between the first drying drum and a downstream filter. The first temperature sensor may be arranged at a predefined first distance to an outlet for the first raw gas of the first drying drum. According to embodiments, the predefined first distance is at least 1 meter. According to preferred embodiments, the predefined first distance is at least 5 meters, in particular at least 10 meters.

According to embodiments, the asphalt mixing plant comprises a second temperature sensor for sensing the second raw gas temperature of the second drying drum. The second temperature sensor may be arranged at a predefined second distance to an outlet for the second raw gas of the second drying drum. According to embodiments, the predefined second distance is at least 1 meter. According to preferred embodiments, the predefined second distance is at least 5 meters, in particular at least 10 meters.

With such an arrangement of the first and/or the second temperature sensor, the temperature profile of the first raw gas leaving the first drying drum and/or the temperature profile of the second raw gas leaving the second drying drum have equalized/mixed/evened out in the corresponding ducts or tubes until the raw gas arrives at the respective temperature sensor(s).

According to an embodiment, the asphalt mixing plant comprises a common filter for filtering the first raw gas of the first drying drum and the second raw gas of the second drying drum. This is particularly cost efficient. According to embodiments, the first temperature sensor for sensing the first raw gas temperature of the first drying drum is arranged within a predefined third distance upstream to an inlet of the common filter. According to embodiments, the predefined third distance is less than 1 meter. According to further embodiments, the predefined distance is less than 0.5 meter.

Such an arrangement of the temperature sensor close to the common filter provides the particular advantage that the temperature sensor may also be used to observe and measure the raw gas input temperature at the filter. This is particularly cost efficient.

It should be noted that the first, the second and the third distance shall refer to the travel distance or in other words the flow distance that the raw gas travels or flows within the corresponding duct or tube of the asphalt mixing plant.

According to an embodiment of another aspect of the invention, a method for operating the asphalt mixing plant according to claim 12 is provided.

According to an embodiment of another aspect of the invention, a computer program product for operating a control unit of the asphalt mixing plant according to claim 13 is provided.

Features and advantages of one aspect of the invention may be applied to the other aspects of the invention as appropriate.

Other advantageous embodiments are listed in the dependent claims as well as in the description below.

### Brief Description of the Drawings

The invention will be better understood and objects other than those set forth above will become apparent from the following detailed description thereof. Such description makes reference to the annexed drawings, wherein:
FIG. 1 shows a schematic diagram of a drying drum according to an embodiment of the invention;
FIG. 2 shows a table illustrating correlations between control parameters of a control unit of an asphalt mixing plant according to embodiments of the invention;
FIG. 3 illustrates a schematic diagram of a first control loop and a second control loop according to an embodiment of the invention;
FIG. 4 shows a block diagram of a control unit comprising a first controller and a second controller according to an embodiment of the invention;
FIG. 5 illustrates a schematic diagram of a third control loop and a fourth control loop according to an embodiment of the invention;
FIG. 6 shows a block diagram of a control unit comprising four controllers according to an embodiment of the invention;
FIG. 7 shows a flow diagram of an asphalt mixing process and the associated devices of the asphalt mixing plant; and
FIG. 8 shows methods steps of a method for controlling an asphalt mixing plant according to an embodiment of the invention.

### Modes for Carrying Out the Invention

In the following description abbreviations as follows may be used:
RA: Reclaimed asphalt;
RAC: Cold reclaimed asphalt;
RAH Hot reclaimed asphalt;
RAP: Reclaimed asphalt pavement;
VA: Virgin aggregate;
TA1: First aggregate temperature
TA2: Second aggregate temperature
P1: Burner load of first burner
P2: Burner load of second burner
TG1: First raw gas temperature
TG2: Second raw gas temperature
RPM1: First rotational speed in revolutions per minute corresponding to the rotational speed of the first drying drum
RMP2: Second rotational speed in revolutions per minute corresponding to the rotational speed of the second drying drum
Tar: target
Act: actual
Aggregate: The term aggregate shall denote the material which is dried and heated by a corresponding drying drum. An aggregate may be embodied as a virgin aggregate, as reclaimed asphalt or as any other suitable material(s) for asphalt mixture production.
A1: First aggregate
A2: Second aggregate
G1: First raw gas
G2: Second raw gas

The use of RAP may reduce the production costs and avoids asphalt waste.

Reclaimed asphalt may be added to the asphalt mixing process via a separate drum, e.g. a parallel drum, or a drum with ring addition.

Reclaimed asphalt may also be added directly into a mixer and/or a hot elevator of the asphalt mixing plant.

The term "Raw gas" shall denote the exhaust gas which exits the drying drum(s) of an asphalt mixing plant. The raw gas comprises the burned gas mix of the burner comprising a fuel gas, an oxidizer such as the ambient air or supplied oxygen and fine aggregate particles. The raw gas exits the drying drum at an outlet and may hence also be denoted as exhaust gas.
The raw gas temperature shall denote the temperature of the raw gas at a predefined measurement point, in particular as measured by a corresponding temperature sensor.

A predictive Proportional-Integral (PI) controller is a specific controller with dead-time compensation as suggested by Tore Hagglund in the document "A predictive PI controller for processes with long dead times," in IEEE Control Systems Magazine, vol. 12, no. 1, pp. 57-60, Feb. 1992, doi: 10.1109/37.120455.

Such an embodied controller contains five process model parameters, while two of the process model parameters are determined automatically based on the three other process parameters, namely based on the proportional term (gain), the integral term (integral time) and the dead time. Hence for such a controller, only three process model parameters need to be tuned, namely the proportional term, the integral term and an estimate of the process dead time. Referring e.g. to page 58, column 2 of the above referenced document, *parameters K, Ti, and L are determined by the operator, while parameters Kp and T are calculated as functions of the K and Ti.* Conceptually, the predictive Proportional-Integral (PI) controller may be considered as a special case of a Smith predictor.

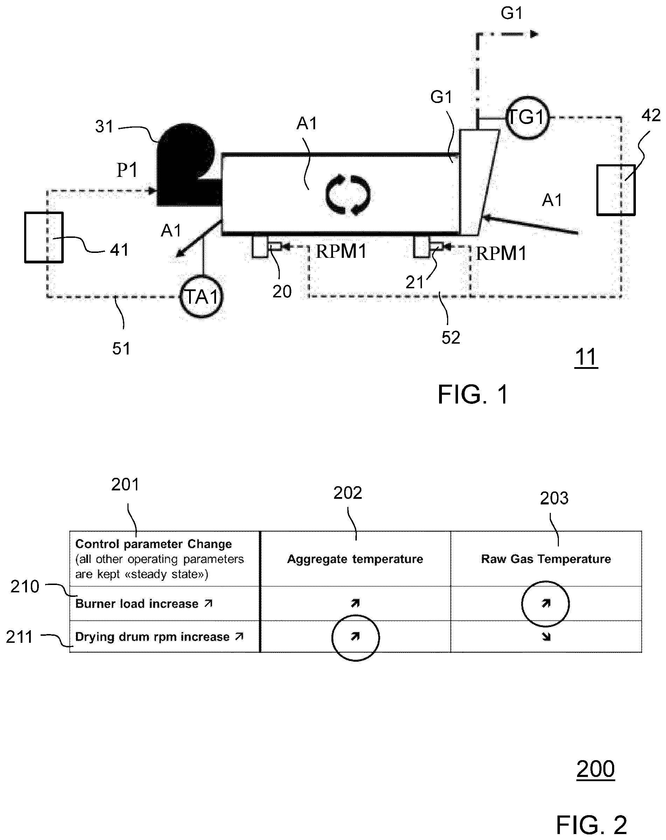

FIG. 1 shows a schematic diagram of a first drying drum 11 according to an embodiment of the invention. The first drying drum 11 may be configured to dry and heat a first aggregate A1 to a first aggregate temperature TA1. The first drying drum 11 comprises a first burner 31. The first drying drum 11 further comprises a first controller 41 configured to control a first control loop 51 to control the first aggregate temperature TA1 of the first aggregate 21 and a second controller 42 comprising a second control loop 52 configured to control a first raw gas temperature TG1 of a first raw gas G1 of the first drying drum 11. The first controller 41 and the second controller 42 are configured to operate independently from each other.

The first controller 41 is configured to control the first aggregate temperature TA1 by controlling the burner load P1 of the first burner 31. The burner load P1 corresponds to the thermal output power of the first burner 31.

The first drying drum 11 is configured to rotate at a first rotational speed RPM1. The second controller 42 is configured to control the first raw gas temperature TG1 of the first raw gas G1 by controlling the first rotational speed RPM1 of the first drying drum 11. The rotational speed of the first drying drum 11 may be adapted by frequency converters (not shown) which are arranged between the second controller 42 and electric motors 20, 21 for rotating the first drying drum 11. The drying drum 11 is embodied as counterflow drum. The virgin aggregate A1 enters the drum 11 at the right side and leaves at the left side as indicated by the arrows, while the raw gas exits the drum 11 at the right side as indicated by a the dashed-dot line.

FIG. 2 shows a table comprising the complex dependencies between control parameters of the asphalt mixing plant according to embodiments of the invention. More particularly, changes of control parameters of the first control loop 51 influence also control parameters of the second control loop 52 and vice versa. Column 201 comprises the control parameters to be changed, namely the burner load of the first burner and the rotational speed of the first drying drum. Column 202 shows the effect which a change of the control parameters of column 201 have on the aggregate temperature of the first aggregate, while column 203 shows the effect which a change of the control parameters of column 201 has on the raw gas temperature of the first drying drum 11. In FIG. 2 an arrow in an upwards direction indicates an increase of the corresponding parameter, while an arrow in a downwards direction indicates a decrease of the corresponding parameter.

As shown in table 200, an increase of the burner load results in an increase of the aggregate temperature as well as in an increase of the raw gas temperature.

An increase of the rotational speed of the first drying drum results in an increase of the aggregate temperature, but in a decrease of the raw gas temperature.

The influence of the respective control parameter on the other control loop is indicated with a circle.

These dependencies may be explained as follows: An increase of the burner load increases the temperature inside the drying drum and hence increases the temperature of the aggregate/material inside the drying drum as well as the temperature of the gas inside the drying drum. An increase of the rotational speed of the drying drum decreases the raw gas temperature, but increases the temperature of the aggregate/material due to a denser material curtain inside the drying drum and a corresponding improved heat transfer from the hot raw gas to the virgin aggregate/material.

Drying drums for virgin aggregates and reclaimed asphalt show a similar behaviour as described above.

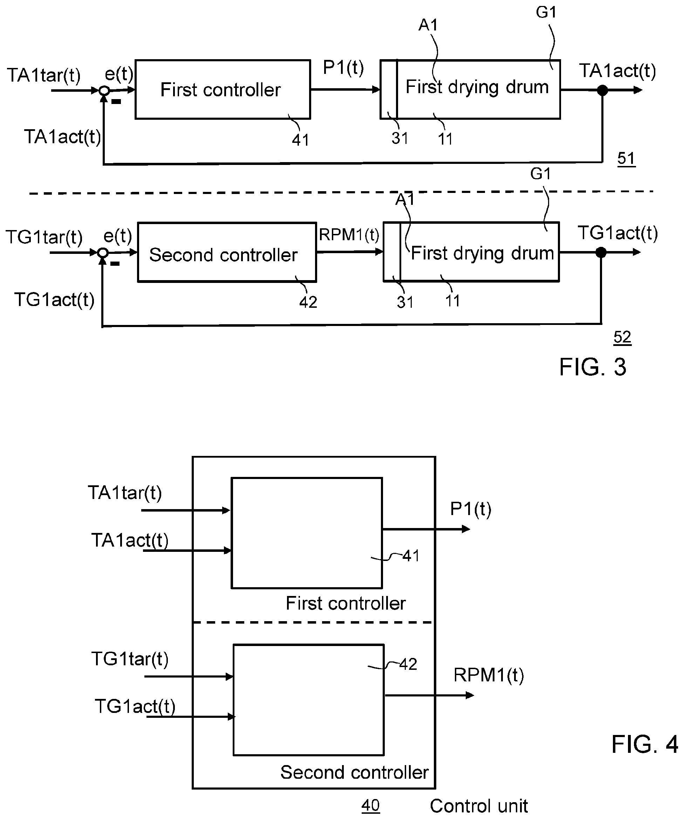

FIG. 3 illustrates a schematic diagram of the first control loop 51 and the second control loop 52 according to an embodiment of the invention. The first controller 41 receives as input signal an error signal e(t). The error signal may be also denoted as control deviation. The error signal e(t) corresponds to the difference between a target signal TA1tar(t) which represents the target temperature of the first aggregate temperature TA1 and the actual temperature TA1act(t) of the first aggregate. The actual temperature TA1act(t) may be measured by a temperature sensor. In this illustration t represents a point in time to reflect that the parameters of the first control loop 51 may change over time.

In dependence on the error signal e(t) the first controller 41 computes as output a control signal (control output or correcting value) P1(t) which represents the first burner load of the first burner 31 and adapts accordingly the first burner load. This changes the temperature in the first drying drum 11 and correspondingly the actual temperature TA1act(t) of the first aggregate material.

The second controller 42 receives as input signal an error signal e(t)which corresponds to the difference between a target signal TG1tar(t) which represents the target temperature of the first raw gas temperature TG1 and the actual raw gas temperature TG1act(t) of the raw gas/exhaust gas of the first drying drum. The actual temperature TG1act(t) may be measured by a temperature sensor. In this illustration t represents a point in time to reflect that the parameters of the second control loop 52 may change over time.

In dependence on the error signal e(t), the second controller 42 computes as output a control signal RPM1(t) which corresponds to the rotational speed in rounds per minutes of the first drying drum 11 and adapts accordingly the rotational speed of the first drying drum 11. This changes the first raw gas temperature TG1act of the exhaust gas of the first drying drum 11.

The first controller 41 and the first control loop 51 operate independently from the second controller 42 and the second control loop 52 despite the interdependencies between them as explained above with reference to FIG. 2. More particularly, the control signal P1(t) of the first controller 41 changes also the first raw gas temperature TG1 and the control signal RPM1 of the second controller 42 changes the first aggregate temperature of the first aggregate.

FIG. 4 shows a block diagram of a control unit 40 which comprises the first controller 41 and the second controller 42 and the corresponding input and output signals of the first controller 41 and the second controller 42.

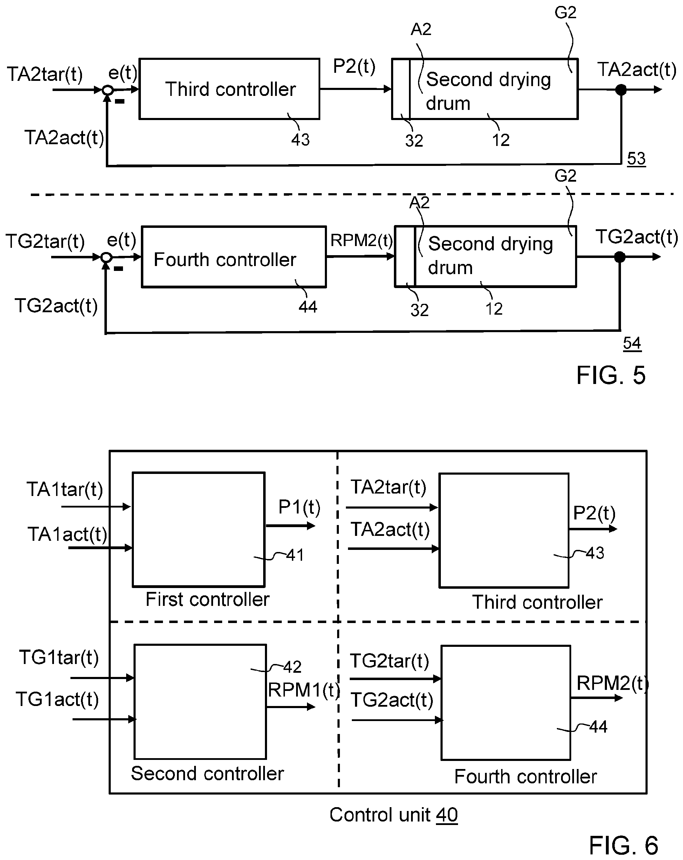

FIG. 5 illustrates a schematic diagram of a third control loop 53 and a fourth control loop 54 according to an embodiment of the invention. The third control loop 53 and the fourth control loop 54 are used to control a second drying drum 12 comprising a second burner 32. The third control loop 53 comprises a third controller 43 which receives as input signal an error signal e(t). The error signal e(t) corresponds to the difference between a target signal TA2tar(t) which represents the target temperature of a second aggregate temperature TA2 of a second aggregate A2 in the second drying drum 12 and the actual temperature TA2act(t) of the second aggregate A2. The actual temperature TA2act(t) may be measured by a corresponding temperature sensor.

In dependence on the error signal e(t) the third controller 43 computes as output a control signal P2(t) which represents a second burner load of the second burner 32 and adapts accordingly the second burner load. This changes the temperature in the second drying drum 12 and correspondingly the actual temperature TA2act(t) of the second aggregate A2.

The fourth controller 44 receives as input signal an error signal e(t)which corresponds to the difference between a target signal TG2tar(t) which represents the target temperature of the second raw gas temperature TG2 and the actual raw gas temperature TG2act(t) of the exhaust gas of the second drying drum 12. The actual temperature TG2act(t) may be measured by a temperature sensor.

In dependence on the respective error signal e(t), the fourth controller 44 computes as output a control signal RPM2(t) which corresponds to the rotational speed in rounds per minutes of the second drying drum 12 and adapts accordingly the rotational speed of the second drying drum 12. This changes the second raw gas temperature TG2act of the raw gas/exhaust gas of the second drying drum 12.

The third controller 43 and the third control loop 53 operate independently from the fourth controller 44 and the fourth control loop 54 despite the interdependencies between them as explained above with reference to FIG. 2. More particularly, the control signal P2(t) of the third controller 43 changes also the second raw gas temperature TG2 and the control signal RPM2 of the fourth controller 44 changes the second aggregate temperature of the second aggregate.

FIG. 6 shows a block diagram of a control unit 40 which comprises the first controller 41, the second controller 42, the third controller 43 and the fourth controller 44 and the corresponding input and output signals of the first controller 41, the second controller 42, the third controller 43 and the fourth controller 44. Such a control unit may be used for asphalt mixing plants which comprise two drying drums, namely the first drying drum 11 and the second drying drum 12. All four controllers 41-44 operate independently from each other which is illustrated with the separation by the dotted lines.

According to the embodiments which comprises two drying drums, namely the first drying drum 11 and the second drying drum 12 as illustrated with reference to FIG. 5 and FIG. 6, the first aggregate A1 which is dried and heated in the first drying drum 11 may be in particular a virgin aggregate, i.e. a new mineral. Furthermore, the second aggregate A2 which is dried and heated in the second drying drum 12 may be in particular reclaimed asphalt or in other words recycled asphalt.

The first controller 41 may be in particular configured to compensate a deadtime of the first control loop 51 and the third controller 43 may be in particular configured to compensate a deadtime of the third control loop 53. The first controller 41 and the third controller 43 may be in particular predictive Proportional-Integral controllers.

The second controller 42 and the fourth controller 44 may be in particular Proportional-Integral controllers.

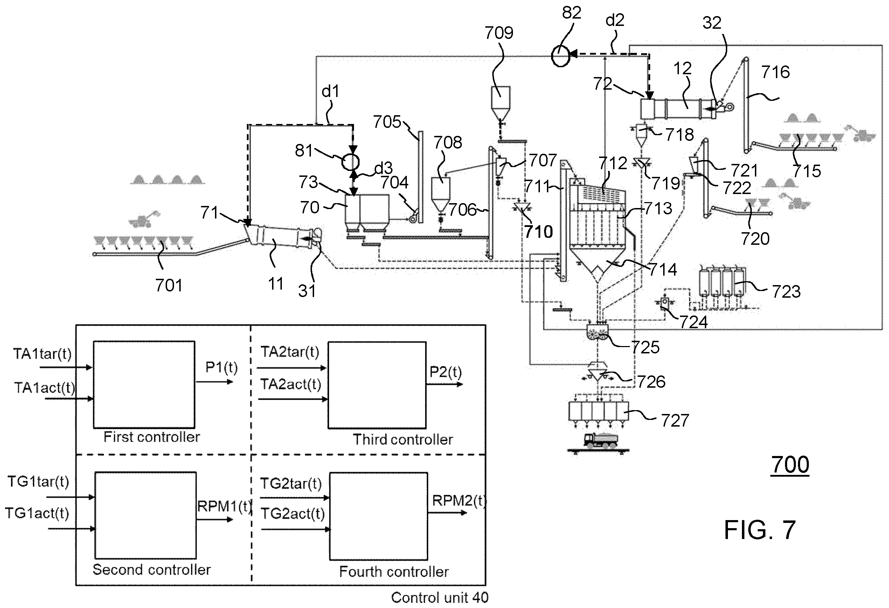

FIG. 7 illustrates in an exemplary way a simplified flow diagram 700 of an asphalt mixing process according to an embodiment of the invention. The asphalt mixing plant comprises a plurality of VA cold feeder units 701, a first drying drum 11 embodied as VA drying/heating drum including a first burner 31, a common filter 70, an exhaust gas blower 704 and an exhaustion pipe 705. The asphalt mixing plant further comprises a reclaimed filler elevator 706, an intermediate reclaimed filler silo 707, a reclaimed filler silo 708, an imported filler silo 709, a filler scale 710 as well as a VA elevator 711, a screen 712, a hot VA silo 713 and a VA scale 714. The asphalt mixing plant further comprises a hot reclaimed asphalt (RAH) addition, including a plurality of (cold) RA feeder units 715, a RA elevator 716, a second drying drum 12 embodied as RA drying/heating drum including a second burner 32, a RAH buffer silo 718 with weighing appliance and a RAH scale 719. Furthermore, the asphalt mixing plant comprises a cold reclaimed asphalt (RAC) addition, including a plurality of (cold) RA feeder units 720, a RA buffer silo 721 and a RA belt scale 722. The asphalt mixing plant furthermore comprises a plurality of bitumen tanks 723 and a bitumen scale 724. The asphalt mixing plant further comprises a mixer 725, a skip 726 and a plurality of asphalt mixture storage silos 727.

The asphalt mixing plant 700 may comprise in particular the control unit 40 as shown in FIG. 6 comprising the first controller 41 and the second controller 42 for controlling the first drying drum 11 and the third controller 43 and the fourth controller 44 for controlling the second drying drum 12.

The common filter 70 is configured to filter the raw gas/exhaust gas of the first drying drum 11 and the raw gas/exhaust gas of the second drying drum 12.

The asphalt mixing plant 700 comprises a first temperature sensor 81 for sensing the first raw gas temperature of the first drying drum 11. According to embodiments, the first temperature sensor 81 is arranged at a predefined first distance d1 to an outlet 71 for the first raw gas of the first drying drum 11. Furthermore, according to embodiments, the first temperature sensor 81 is arranged within a predefined third distance d3 to an inlet 73 of the common filter 70.

The asphalt mixing plant 700 further comprises a second temperature sensor 82 for sensing the second raw gas temperature of the second drying drum 12. According to embodiments, the second temperature sensor 82 is arranged at a predefined second distance d2 to an outlet 72 for the second raw gas of the second drying drum 12.

The first, the second and the third distance shall refer to the travel distance or in other words the flow distance that the raw gas travels or flows within the corresponding duct or tube of the asphalt mixing plant. This is indicated with the dotted lines for d1, d2 and d3.

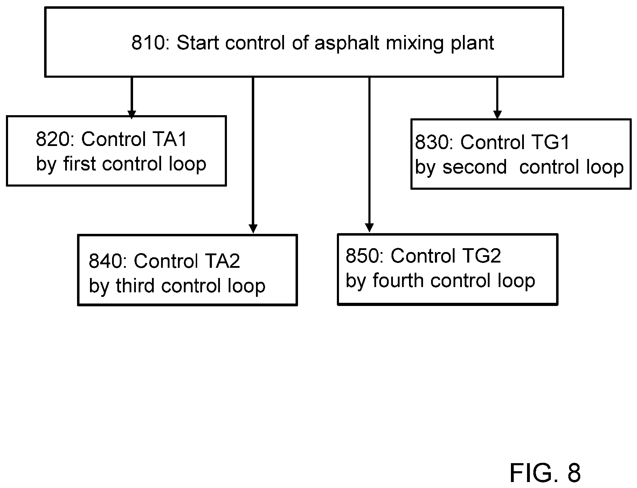

FIG. 8 shows methods steps of a method for controlling an asphalt mixing plant according to an embodiment of the invention.

At a step 810, the operation and control of the asphalt mixing plant is started. For the exemplary embodiment of FIG. 8 it is assumed that the asphalt mixing plant comprises a first and a second drying drum as shown e.g. in FIG. 7 as well as a first, a second, a third and a fourth controller. Accordingly, the operation of the asphalt mixing plant comprises drying and heating, by the first drying drum, a first aggregate to a first aggregate temperature and drying and heating, by the second drying drum, a second aggregate to a second aggregate temperature.

At a step 820, the first controller controls the first aggregate temperature TA1 of the first aggregate.

At a step 830, the second controller controls the first raw gas temperature TG1 of the raw gas of the first drying drum.

At a step 840, the third controller controls the second aggregate temperature TA2 of the second aggregate.

At a step 850, the fourth controller controls the second raw gas temperature TG2 of the raw gas of the second drying drum.
According to embodiments, the control steps 820, 830, 840 and 850 are performed in parallel, but independently from each other by their respective controllers.

Aspects of the present invention may be embodied as a system, in particular an asphalt mixing plant, a method, and/or a computer program product. The computer program product may include a computer readable storage medium (or media) having computer readable program instructions thereon for causing a processor, in particular a processor of the control unit 40, to carry out aspects of the present invention.

The computer readable storage medium can be a tangible device that can retain and store instructions for use by an instruction execution device.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute in particular on the control unit 40 of the asphalt mixing plant.

Aspects of the present invention are described herein with reference to flowchart illustrations and/or block diagrams of methods, apparatus (systems), and computer program products according to embodiments of the invention.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The flowchart and block diagrams in the Figures illustrate the architecture, functionality, and operation of possible implementations of systems, methods, and computer program products according to various embodiments of the present invention.

While there are shown and described presently preferred embodiments of the invention, it is to be distinctly understood that the invention is not limited thereto but may be otherwise variously embodied and practiced within the scope of the following claims.

## Claims

1. An asphalt mixing plant (700), comprising
a first drying drum (11) for drying and heating a first aggregate to a first aggregate temperature, the first drying drum (11) comprising a first burner (31);
a first controller (41) configured to control by a first control loop (51) the first aggregate temperature of the first aggregate by controlling the burner load of the first burner (31); and
a second controller (42) configured to control by a second control loop (52) a first raw gas temperature of a first raw gas exiting the first drying drum (11); wherein
the first drying drum (11) is configured to rotate at a first rotational speed;
the second controller (42) is configured to control the first raw gas temperature of the first raw gas exiting the first drying drum by controlling the first rotational speed of the first drying drum (11); and
the first controller (41) and the second controller (42) are configured to operate independently from each other.

2. An asphalt mixing plant according to any of the preceding claims, wherein the asphalt mixing plant (700) comprises
a second drying drum (12) for drying and heating a second aggregate to a second aggregate temperature, the second drying drum (12) comprising a second burner (32);
a third controller (43) configured to control by a third control loop (53) the second aggregate temperature of the second aggregate; and
a fourth controller (44) configured to control by a fourth control loop (54) a second raw gas temperature of a second raw gas of the second drying drum (12); wherein
the third controller (43) and the fourth controller (44) are configured to operate independently from each other;
the third controller (43) is configured to control the second aggregate temperature of the second drying drum (12) by controlling the burner load of the second burner (32);
the second drying drum (12) is configured to rotate at a second rotational speed; and
the fourth controller (44) is configured to control the second raw gas temperature of the second raw gas exiting the second drying drum (12) by controlling the second rotational speed of the second drying drum (12).

3. An asphalt mixing plant according to claim 1 or **2,** wherein the first aggregate is a virgin aggregate or reclaimed asphalt.

4. An asphalt mixing plant according to claim **2,** wherein the first aggregate is a virgin aggregate and the second aggregate is reclaimed asphalt.

5. An asphalt mixing plant according to any of the preceding claims, wherein the first controller (41) is configured to compensate a deadtime of the first control loop (51); and/or
the third controller (43) is configured to compensate a deadtime of the third control loop (53).

6. An asphalt mixing plant according to any of the preceding claims, wherein
the first controller (41) is a predictive Proportional-Integral controller; and/or
the third controller (43) is a predictive Proportional-Integral controller

7. An asphalt mixing plant according to any of the preceding claims, wherein the second controller (42) is a Proportional-Integral controller; and/or
the fourth controller (44) is a Proportional-Integral controller.

8. An asphalt mixing plant according to any of the preceding claims, wherein the first drying drum (11) and/or the second drying drum (12) is a direct flow drum.

9. An asphalt mixing plant according to any of the preceding claims, wherein the first drying drum (11) and/or the second drying drum (12) is a counter flow drum.

10. An asphalt mixing plant according to any of the preceding claims, wherein the asphalt mixing plant comprises
a first temperature sensor (81) for sensing the first raw gas temperature of the first drying drum, the first temperature sensor (81) being arranged at a predefined first distance to an outlet (71) for the first raw gas of the first drying drum (11), wherein the predefined first distance is at least 1 meter; and/or
a second temperature sensor (82) for sensing the second raw gas temperature of the second drying drum (12), wherein the second temperature sensor (82) is arranged at a predefined second distance to an outlet (72) for the second raw gas of the second drying drum (12), wherein the predefined second distance is at least 1 meter.

11. An asphalt mixing plant according to claim 10, wherein the asphalt mixing plant comprises
a common filter (70) for filtering the first raw gas of the first drying drum (11) and the second raw gas of the second drying drum (12); wherein
the first temperature sensor (81) for sensing the first raw gas temperature of the first drying drum is arranged within a predefined third distance to an inlet (73) of the common filter, wherein the predefined third distance is less than 1 meter.

12. A method for operating an asphalt mixing plant (700), the asphalt mixing plant comprising a first drying drum (11) comprising a first burner (31), a first controller (41) and a second controller (42), the method comprising
drying and heating, by the first drying drum (11), a first aggregate to a first aggregate temperature, the first drying drum comprising a first burner (31);
controlling, by the first controller (41), the first aggregate temperature of the first aggregate by controlling the burner load of the first burner (31);
rotating the first drying drum (11) at a first rotational speed; and
controlling, by the second controller (42), a first raw gas temperature of a first raw gas exiting the first drying drum (11) by controlling the first rotational speed of the first drying drum (11); wherein the controlling by the first controller (41) and the controlling by the second controller (42) is performed independently from each other via a separate first control loop (51) and a separate second control loop (52) respectively.

13. A computer program product for operating a control unit (40) of an asphalt mixing plant (700), the asphalt mixing plant comprising a first drying drum (11) for drying and heating a first aggregate to a first aggregate temperature, the first drying drum (11) comprising a first burner (31); the control unit (40) comprising a first controller (41) and a second controller (42), the computer program product comprising a computer readable storage medium having program instructions embodied therewith, the program instructions executable by the control unit (40) to cause the control unit to perform a method comprising
controlling, by the first controller (41), the first aggregate temperature of the first aggregate by controlling the burner load of the first burner (31);
rotating the first drying drum (11) at a first rotational speed; and
controlling, by the second controller (42), a first raw gas temperature of a first raw gas exiting the first drying drum (11) by controlling the first rotational speed of the first drying drum (11); wherein the controlling by the first controller (41) and the controlling by the second controller (42) is performed independently from each other via a separate first control loop (51) and a separate second control loop (52) respectively.

## Patentansprüche

1. Asphaltmischanlage (700), umfassend
eine erste Trockentrommel (11) zum Trocknen und Erwärmen eines ersten Aggregats auf eine erste Aggregattemperatur, wobei die erste Trockentrommel (11) einen ersten Brenner (31) aufweist;
einen ersten Regler (41), der so konfiguriert ist, dass er durch einen ersten Regelkreis (51) die erste Aggregattemperatur des ersten Aggregats durch Regelung der Brennerlast des ersten Brenners (31) regelt; und
einen zweiten Regler (42), der so konfiguriert ist, dass er durch einen zweiten Regelkreis (52) eine erste Rohgastemperatur eines ersten Rohgases, das aus der ersten Trockentrommel (11) austritt, regelt; wobei
die erste Trockentrommel (11) so konfiguriert ist, dass sie mit einer ersten Drehgeschwindigkeit rotiert;
der zweite Regler (42) so konfiguriert ist, dass er die erste Rohgastemperatur des ersten Rohgases, das aus der ersten Trockentrommel austritt, durch Regeln der ersten Drehgeschwindigkeit der ersten Trockentrommel (11) regelt; und
der erste Regler (41) und der zweite Regler (42) so konfiguriert sind, dass sie unabhängig voneinander arbeiten.

2. Asphaltmischanlage nach einem der vorhergehenden Ansprüche, wobei die Asphaltmischanlage (700) umfasst
eine zweite Trockentrommel (12) zum Trocknen und Erwärmen eines zweiten Aggregats auf eine zweite Aggregattemperatur, wobei die zweite Trockentrommel (12) einen zweiten Brenner (32) umfasst;
einen dritten Regler (43), der so konfiguriert ist, dass er durch einen dritten Regelkreis (53) die zweite Aggregattemperatur des zweiten Aggregats regelt; und
einen vierten Regler (44), der so konfiguriert ist, dass er durch einen vierten Regelkreis (54) eine zweite Rohgastemperatur eines zweiten Rohgases der zweiten Trockentrommel (12) regelt; wobei der dritte Regler (43) und der vierte Regler (44) so konfiguriert sind, dass sie unabhängig voneinander arbeiten;
der dritte Regler (43) so konfiguriert ist, dass er die zweite Aggregattemperatur der zweiten Trockentrommel (12) durch Regeln der Brennerlast des zweiten Brenners (32) regelt;
die zweite Trockentrommel (12) so konfiguriert ist, dass sie mit einer zweiten Drehgeschwindigkeit rotiert; und
der vierte Regler (44) so konfiguriert ist, dass er die zweite Rohgastemperatur des zweiten Rohgases, das aus der zweiten Trockentrommel (12) austritt, durch Regeln der zweiten Drehgeschwindigkeit der zweiten Trockentrommel (12) regelt.

3. Asphaltmischanlage nach Anspruch 1 oder 2, wobei das erste Aggregat ein neues Aggregat oder wiederaufbereiteter Asphalt ist.

4. Asphaltmischanlage nach Anspruch 2, wobei das erste Aggregat ein neues Aggregat und das zweite Aggregat wiederaufbereiteter Asphalt ist.

5. Asphaltmischanlage nach einem der vorhergehenden Ansprüche, wobei der erste Regler (41) so konfiguriert ist, dass er eine Totzeit des ersten Regelkreises (51) kompensiert; und/oder
der dritte Regler (43) so konfiguriert ist, dass er eine Totzeit des dritten Regelkreises (53) kompensiert.

6. Asphaltmischanlage nach einem der vorhergehenden Ansprüche, wobei
der erste Regler (41) ein prädiktiver Proportional-Integral-Regler ist; und/oder
der dritte Regler (43) ein prädiktiver Proportional-Integral-Regler ist.

7. Asphaltmischanlage nach einem der vorhergehenden Ansprüche, wobei der zweite Regler (42) ein Proportional-Integral-Regler ist; und/oder
der vierte Regler (44) ein Proportional-Integral-Regler ist.

8. Asphaltmischanlage nach einem der vorhergehenden Ansprüche, wobei die erste Trockentrommel (11) und/oder die zweite Trockentrommel (12) eine Direktstromtrommel ist.

9. Asphaltmischanlage nach einem der vorhergehenden Ansprüche, wobei die erste Trockentrommel (11) und/oder die zweite Trockentrommel (12) eine Gegenstromtrommel ist.

10. Asphaltmischanlage nach einem der vorhergehenden Ansprüche, wobei die Asphaltmischanlage umfasst
einen ersten Temperatursensor (81) zum Erfassen der ersten Rohgastemperatur der ersten Trockentrommel, wobei der erste Temperatursensor (81) in einem vordefinierten ersten Abstand zu einem Auslass (71) für das erste Rohgas der ersten Trockentrommel (11) angeordnet ist, wobei der vordefinierte erste Abstand mindestens 1 Meter beträgt; und/oder
einen zweiten Temperatursensor (82) zum Erfassen der zweiten Rohgastemperatur der zweiten Trockentrommel (12), wobei der zweite Temperatursensor (82) in einem vordefinierten zweiten Abstand zu einem Auslass (72) für das zweite Rohgas der zweiten Trockentrommel (12) angeordnet ist, wobei der vordefinierte zweite Abstand mindestens 1 Meter beträgt.

11. Asphaltmischanlage nach Anspruch 10, wobei die Asphaltmischanlage umfasst
einen gemeinsamen Filter (70) zum Filtern des ersten Rohgases der ersten Trockentrommel (11) und des zweiten Rohgases der zweiten Trockentrommel (12); wobei
der erste Temperatursensor (81) zum Erfassen der ersten Rohgastemperatur der ersten Trockentrommel innerhalb eines vordefinierten dritten Abstands zu einem Einlass (73) des gemeinsamen Filters angeordnet ist, wobei der vordefinierte dritte Abstand weniger als 1 Meter beträgt.

12. Verfahren zum Betreiben einer Asphaltmischanlage (700), wobei die Asphaltmischanlage eine erste Trockentrommel (11) mit einem ersten Brenner (31), einem ersten Regler (41) und einem zweiten Regler (42) umfasst, wobei das Verfahren umfasst
Trocknen und Erhitzen eines ersten Aggregats durch die erste Trockentrommel (11) auf eine erste Aggregattemperatur, wobei die erste Trockentrommel einen ersten Brenner (31) umfasst;
Regeln der ersten Aggregattemperatur des ersten Aggregats durch den ersten Regler (41), indem die Brennerlast des ersten Brenners (31) geregelt wird;
Drehen der ersten Trockentrommel (11) mit einer ersten Drehgeschwindigkeit; und
Regeln einer ersten Rohgastemperatur eines ersten Rohgases, das aus der ersten Trockentrommel (11) austritt, durch den zweiten Regler (42) durch Regeln der ersten Drehgeschwindigkeit der ersten Trockentrommel (11); wobei das Regeln durch die erste Regelung (41) und das Regeln durch die zweite Regelung (42) unabhängig voneinander über einen separaten ersten Regelkreis (51) bzw. einen separaten zweiten Regelkreis (52) durchgeführt wird.

13. Computerprogrammprodukt zum Betreiben einer Regeleinheit (40) einer Asphaltmischanlage (700), wobei die Asphaltmischanlage eine erste Trockentrommel (11) zum Trocknen und Erwärmen eines ersten Aggregats auf eine erste Aggregattemperatur umfasst, wobei die erste Trockentrommel (11) einen ersten Brenner (31) umfasst; die Regeleinheit (40) einen ersten Regler (41) und einen zweiten Regler(42) umfasst, wobei das Computerprogrammprodukt ein computerlesbares Speichermedium mit darin verkörperten Programmanweisungen umfasst, wobei die Programmanweisungen durch die Regeleinheit (40) ausführbar sind, um zu bewirken, dass die Regeleinheit ein Verfahren durchführt, das umfasst
Regeln der ersten Aggregattemperatur des ersten Aggregats durch den ersten Regler (41), indem die Brennerlast des ersten Brenners (31) geregelt wird;
Drehen der ersten Trockentrommel (11) mit einer ersten Drehgeschwindigkeit; und
Regeln einer ersten Rohgastemperatur eines ersten Rohgases, das aus der ersten Trockentrommel (11) austritt, durch den zweiten Regler (42), indem die erste Drehgeschwindigkeit der ersten Trockentrommel (11) geregelt wird; wobei das Regeln durch den ersten (41) und das Regeln durch den zweiten Regler (42) unabhängig voneinander über einen separaten ersten Regelkreis (51) bzw. einen separaten zweiten Regelkreis (52) durchgeführt wird.

## Revendications

1. Une centrale d'enrobage d'asphalte (700), comprenant
un premier tambour de séchage (11) pour sécher et chauffer un premier agrégat à une première température d'agrégat, le premier tambour de séchage (11) comprenant un premier brûleur (31) ;
une première commande (41) configurée pour commander, par une première boucle de commande (51), la première température d'agrégat du premier agrégat en commandant la charge du premier brûleur (31) ; et
une deuxième commande (42) configurée pour commander, par une deuxième boucle de commande (52), une première température de gaz brut d'un premier gaz brut sortant du premier tambour de séchage (11) ; dans laquelle
le premier tambour de séchage (11) est configuré pour tourner à une première vitesse de rotation ;
la deuxième commande (42) est configurée pour commander la première température de gaz brut du premier gaz brut sortant du premier tambour de séchage en commandant la première vitesse de rotation du premier tambour de séchage (11) ; et
la première commande (41) et la deuxième commande (42) sont configurés pour fonctionner indépendamment l'une de l'autre.

2. Une centrale d'enrobage d'asphalte selon l'une quelconque des revendications précédentes, la centrale d'enrobage (700) comprenant
un deuxième tambour de séchage (12) pour sécher et chauffer un deuxième agrégat à une deuxième température d'agrégat, le deuxième tambour de séchage (12) comprenant un deuxième brûleur (32) ;
une troisième commande (43) configurée pour commander, par une troisième boucle de commande (53), la deuxième température d'agrégat du deuxième agrégat ; et
une quatrième commande (44) configurée pour commander, par une quatrième boucle de commande (54), une deuxième température de gaz brut d'un deuxième gaz brut du deuxième tambour de séchage (12) ; dans laquelle
la troisième commande (43) et la quatrième commande (44) sont configurées pour fonctionner indépendamment l'une de l'autre ;
la troisième commande (43) est configurée pour commander la deuxième température d'agrégat du deuxième tambour de séchage (12) en commandant la charge du deuxième brûleur (32) ;
le deuxième tambour de séchage (12) est configuré pour tourner à une deuxième vitesse de rotation ; et
la quatrième commande (44) est configurée pour commander la deuxième température du gaz brut du deuxième gaz brut sortant du deuxième tambour de séchage (12) en commandant la deuxième vitesse de rotation du deuxième tambour de séchage (12).

3. Une centrale d'enrobage d'asphalte selon la revendication 1 ou 2, dans laquelle le premier agrégat est un agrégat vierge ou de l'asphalte recyclé.

4. Une centrale d'enrobage d'asphalte selon la revendication 2, dans laquelle le premier agrégat est un agrégat vierge et le deuxième agrégat est de l'asphalte recyclé.

5. Une centrale d'enrobage d'asphalte selon l'une quelconque des revendications précédentes, dans laquelle la première commande (41) est configurée pour compenser un temps mort de la première boucle de commande (51) ; et/ou
la troisième commande (43) est configurée pour compenser un temps mort de la troisième boucle de commande (53).

6. Une centrale d'enrobage d'asphalte selon l'une quelconque des revendications précédentes, dans laquelle
la première commande (41) est une commande proportionnelle-intégrale prédictive ; et/ou
la troisième commande (43) est une commande proportionnelle-intégrale prédictive.

7. Une centrale d'enrobage d'asphalte selon l'une quelconque des revendications précédentes, dans laquelle la deuxième commande (42) est une commande proportionnelle-intégrale ; et/ou
la quatrième commande (44) est une commande proportionnelle-intégrale.

8. Une centrale d'enrobage d'asphalte selon l'une quelconque des revendications précédentes, dans laquelle le premier tambour de séchage (11) et/ou le deuxième tambour de séchage (12) est un tambour à flux direct.

9. Centrale d'enrobage d'asphalte selon l'une quelconque des revendications précédentes, dans laquelle le premier tambour de séchage (11) et/ou le deuxième tambour de séchage (12) est un tambour à contre-courant.

10. Une centrale d'enrobage d'asphalte selon l'une quelconque des revendications précédentes, dans laquelle la centrale d'enrobage d'asphalte comprend
un premier capteur de température (81) pour détecter la première température du gaz brut du premier tambour de séchage, le premier capteur de température (81) étant disposé à une première distance prédéfinie d'une sortie (71) pour le premier gaz brut du premier tambour de séchage (11), la première distance prédéfinie étant d'au moins 1 mètre ; et/ou
un deuxième capteur de température (82) pour détecter la deuxième température du gaz brut du deuxième tambour de séchage (12), le deuxième capteur de température (82) étant disposé à une deuxième distance prédéfinie d'une sortie (72) pour le deuxième gaz brut du deuxième tambour de séchage (12), la deuxième distance prédéfinie étant d'au moins 1 mètre.

11. Une centrale d'enrobage d'asphalte selon la revendication 10, la centrale d'enrobage d'asphalte comprenant
un filtre commun (70) pour filtrer le premier gaz brut du premier tambour de séchage (11) et le deuxième gaz brut du deuxième tambour de séchage (12) ; dans laquelle
le premier capteur de température (81) destiné à détecter la température du premier gaz brut du premier tambour de séchage est disposé à une troisième distance prédéfinie d'une entrée (73) du filtre commun, la troisième distance prédéfinie étant inférieure à 1 mètre.

12. Un procédé pour faire fonctionner une centrale d'enrobage d'asphalte (700), la centrale d'enrobage d'asphalte comprenant un premier tambour de séchage (11) comprenant un premier brûleur (31), une première commande (41) et une deuxième commande (42), le procédé comprenant
sécher et chauffer, par le premier tambour de séchage (11), un premier agrégat à une première température d'agrégat, le premier tambour de séchage comprenant un premier brûleur (31) ;
commander, à l'aide de la première commande (41), la première température d'agrégat du premier agrégat en commandant la charge du premier brûleur (31) ;
faire tourner le premier tambour de séchage (11) à une première vitesse de rotation ; et
commander, à l'aide de la deuxième commande (42), une première température de gaz brut d'un premier gaz brut sortant du premier tambour de séchage (11) en commandant la première vitesse de rotation du premier tambour de séchage (11) ; dans lequel la commande par la première commande (41) et la commande par la deuxième commande (42) sont effectuées indépendamment l'une de l'autre via une première boucle de commande séparée (51) et une deuxième boucle de commande séparée (52) respectivement.

13. Un produit logiciel destiné à faire fonctionner une unité de commande (40) d'une centrale d'enrobage d'asphalte (700), la centrale d'enrobage d'asphalte comprenant un premier tambour de séchage (11) destiné à sécher et à chauffer un premier agrégat à une première température d'agrégat, le premier tambour de séchage (11) comprenant un premier brûleur (31) ; l'unité de commande (40) comprenant une première commande (41) et une deuxième commande (42), le produit logiciel comprenant un support de stockage lisible par ordinateur contenant des instructions de programme, les instructions de programme pouvant être exécutées par l'unité de commande (40) pour amener l'unité de commande à exécuter un procédé comprenant
commander, par la première commande (41), la première température d'agrégat du premier agrégat en commandant la charge du premier brûleur (31) ;
faire tourner le premier tambour de séchage (11) à une première vitesse de rotation ; et
commander, par la deuxième commande (42), une première température de gaz brut d'un premier gaz brut sortant du premier tambour de séchage (11) en commandant la première vitesse de rotation du premier tambour de séchage (11) ; dans lequel la commande par la première commande (41) et la commande par la deuxième commande (42) sont effectuées indépendamment l'une de l'autre via une première boucle de commande séparée (51) et une deuxième boucle de commande séparée (52) respectivement.
